# EUROPEAN PATENT APPLICATION

(11) **EP 4 778 791 A1**
(43) Date of publication of application: **22.07.2026**
(21) Application number: 26151597.7
(22) Date of filing: 13.01.2026
(51) Int. Cl.: B60R 25/24

(54) **SMART KEY SYSTEM**

(30) Priority: 16.01.2025 JP 2025005867
(71) Applicant: Suzuki Motor Corporation, Hamamatsu-shi, Shizuoka 432-8611 (JP)
(72) Inventor: YAMADA, Kenshiro, Hamamatsu-shi, 432-8611 (JP)
(74) Representative: Haseltine Lake Kempner LLP

(57) **Abstract**

A smart key system (1) includes a vehicle-side communication device (12) installed in a vehicle (2) and a smart key (11) carried by a driver (3). The vehicle-side communication device and the smart key are wirelessly connected. The system includes: a main switch (13) accepts activation of the vehicle-side communication device; a start switch (14) accepts start of a prime mover (16) of the vehicle; and a controller (15) authenticates a response signal from the smart key. When the main switch is turned ON, an authentication process is started in the controller, and a periodic authentication is performed periodically after an initial authentication is performed. When the start switch is turned ON within a certain period after successful authentication, the controller starts the prime mover, and when the start switch is still OFF even after a certain period elapses since successful authentication, the controller resets a state of the successful authentication.

## Description

### TECHNICAL FIELD

The present invention relates to a smart key system.

### BACKGROUND ART

In recent years, a saddle-type vehicle equipped with a smart key system that starts an engine without inserting a mechanical key has been known (see, for example, Patent Literature 1). In the smart key system described in Patent Literature 1, radio waves are emitted from an antenna in a vehicle-side communication device, and when a driver holding a smart key operates a request switch (which corresponds to a start switch and main switch in Patent Literature 1) installed in a vehicle, communication is initiated between the vehicle-side communication device and the smart key. The smart key then transmits an ID to the vehicle-side communication device, and a control device compares a unique ID of a vehicle with the ID of the smart key to release various locks. Also referred to as remote keyless entry. In the present disclosure, authentication using remote keyless entry may be referred to as smart authentication.

### CITATION LIST

### PATENT LITERATURE

Patent Literature 1: JP2004-116261A

However, when the vehicle is left with the main switch turned on after smart authentication, there is a risk that the vehicle may be stolen. For this reason, some saddle-type vehicles have smart key systems that perform smart authentication when the start switch is pressed, so that power sources such as an engine or motor will not start unless the smart key is in possession of someone who pressed the start switch. However, smart authentication takes time, so models that adopt the above-described specifications have a time lag from when the start switch is pressed until the power source starts.

### SUMMARY

The present invention is made in consideration of the above-mentioned points, and has an object to provide a smart key system that can reduce a time lag from when a start switch is pressed until a power source starts.

A smart key system according to an aspect of the present invention is a smart key system that includes a vehicle-side communication device installed in a vehicle and a smart key carried by a driver, the vehicle-side communication device and the smart key being wirelessly connected, the system including a main switch configured to accept activation of the vehicle-side communication device, a start switch configured to accept start of a prime mover of the vehicle, and a controller configured to authenticate a response signal from the smart key, where when the main switch is turned ON, an authentication process is started in the controller, and authentication is performed periodically after an initial authentication is performed, and when the start switch is turned ON within a certain period after successful authentication, the controller starts the prime mover, and when the start switch is still OFF even after a certain period elapses since successful authentication, the controller resets a state of the successful authentication.

According to the smart key system of the aspect of the present invention, authentication is completed before the start switch is turned ON, so the prime mover is started at a timing when the start switch is turned ON. A time lag from when the start switch is turned ON until the prime mover starts is minimized. Even when the driver leaves the vehicle after the main switch is turned on, the status of successful authentication is reset after the certain period has elapsed, so that even when a third party presses the start switch, the prime mover is not started and the vehicle is not stolen.

### BRIEF DESCRIPTION OF DRAWINGS

FIG. 1 is a conceptual diagram of a smart key system according to an example.
FIG. 2 is a time chart of smart authentication in a comparative example.
FIG. 3 is a block diagram of the smart key system according to the example.
FIG. 4A is a time chart of the smart authentication according to the example.
FIG. 4B is a time chart of the smart authentication according to the example.
FIG. 5A is a time chart of the smart authentication according to the example.
FIG. 5B is a time chart of the smart authentication according to the example.
FIG. 6 is a flow chart of the smart authentication according to the example.

### DESCRIPTION OF EMBODIMENTS

In a smart key system according to an aspect of the present invention, a vehicle-side communication device is installed in a vehicle, a smart key is carried by a driver, and the vehicle-side communication device and the smart key are wirelessly connected. The main switch accepts activation of the vehicle-side communication device, and the start switch accepts start of a prime mover. A controller authenticates a response signal from the smart key. When the main switch is turned ON, an authentication process is started in the controller, and authentication is performed periodically after an initial authentication is performed. When the start switch is turned ON within a certain period after successful authentication, the controller starts the prime mover. When the start switch is still OFF even after a certain period elapses since successful authentication, the controller resets a state of the successful authentication. Since the authentication is completed before the start switch is turned ON, the prime mover is started at the timing when the start switch is turned ON. A time lag from when the start switch is turned ON until the prime mover starts is minimized. Even when the driver leaves the vehicle after the main switch is turned on, the status of successful authentication is reset after the certain period has elapsed, so that even when a third party presses the start switch, the prime mover is not started and the vehicle is not stolen.

### Example

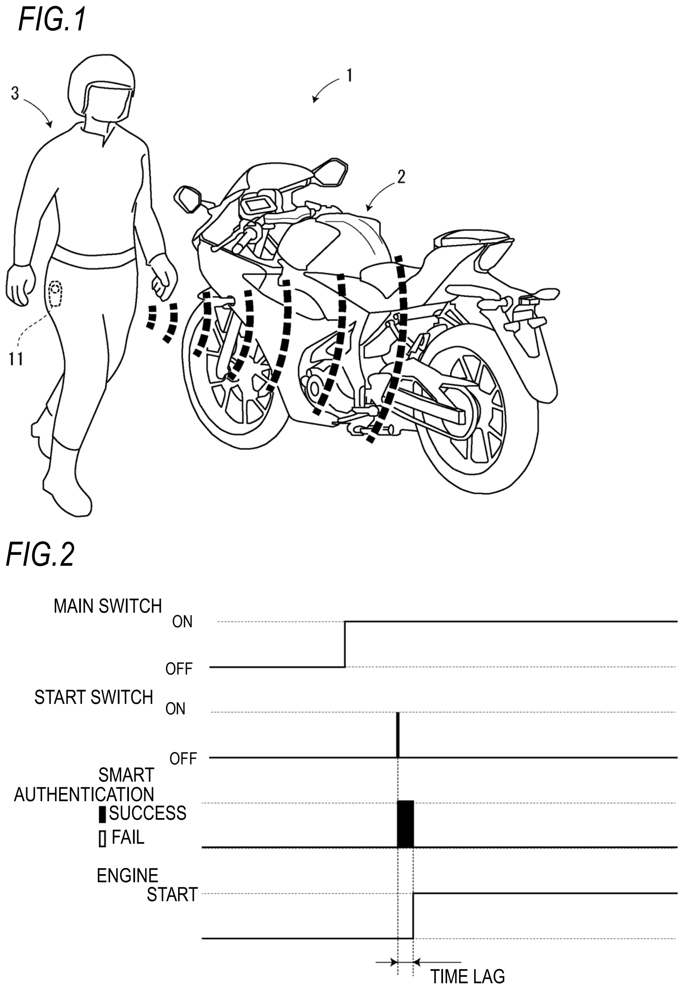

A smart key system of this example will be described below with reference to the accompanying drawings. FIG. 1 is a conceptual diagram of a smart key system according to the this example. FIG. 2 is a time chart of smart authentication in a comparative example.

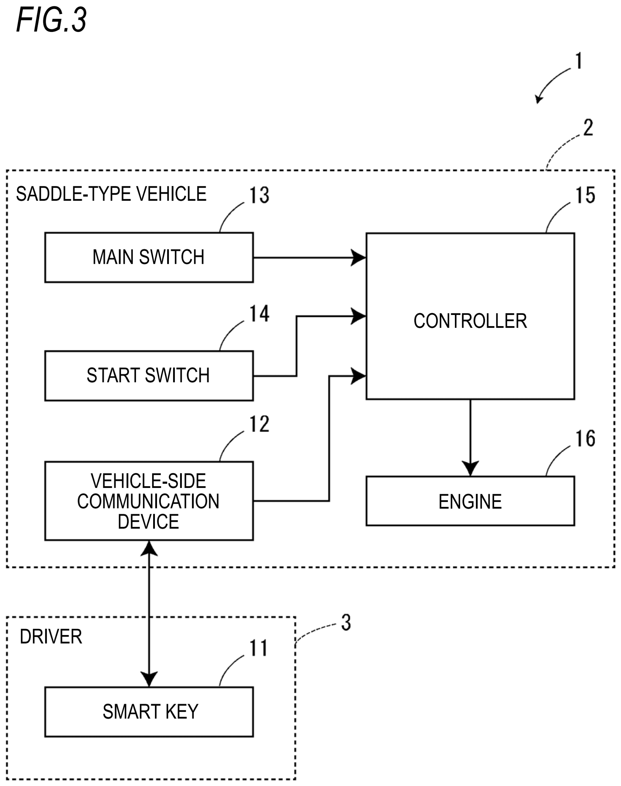

As illustrated in FIG. 1, in a smart key system 1, smart authentication is performed via wireless communication between a saddle-type vehicle 2 and a smart key 11 carried by a driver 3. In this case, the driver first presses a request switch (not illustrated) provided in the vehicle, which causes a vehicle-side communication device 12 (see FIG. 3) to emit a weak radio wave to search for the smart key 11. When the driver 3 carrying the smart key 11 is in a vicinity of the saddle-type vehicle 2, a response signal is transmitted from the smart key 11 to the vehicle-side communication device 12. A unique ID is registered in the saddle-type vehicle 2, and the ID of the saddle-type vehicle 2 is collated with an ID contained in the response signal. When the authentication is successful, start of an engine 16 (see FIG. 3) and the like are permitted. In addition, operation of a request switch is not required to activate the vehicle-side communication device 12, and a response signal may be transmitted from the smart key 11 to the vehicle-side communication device 12 simply by the driver 3 carrying the smart key 11 approaching the saddle-type vehicle 2.

In a typical smart key system, if smart authentication is performed when the main switch is turned on, there is a risk that the vehicle may be stolen if the driver temporarily leaves the saddle-type vehicle after successful authentication. For this reason, it is desirable to perform smart authentication not when the main switch is turned on, but when the start switch is turned on after the main switch is turned on. However, as illustrated in FIG. 2, the engine does not start during a period from when the start switch is turned on until smart authentication is completed, and the time required for this authentication process becomes a time lag until the engine starts.

Therefore, in the smart key system 1 of this example, smart authentication is performed when the main switch is turned ON, while a state of successful smart authentication is reset when a certain period passes after successful authentication without the start switch being turned ON. Since smart authentication is completed before the start switch is turned ON, the engine starts immediately after the start switch is turned ON, reducing the time lag. Furthermore, even when the driver temporarily leaves the saddle-type vehicle after successful authentication, the state of successful authentication is reset after a certain period has passed, thereby preventing theft of the saddle-type vehicle by a third party.

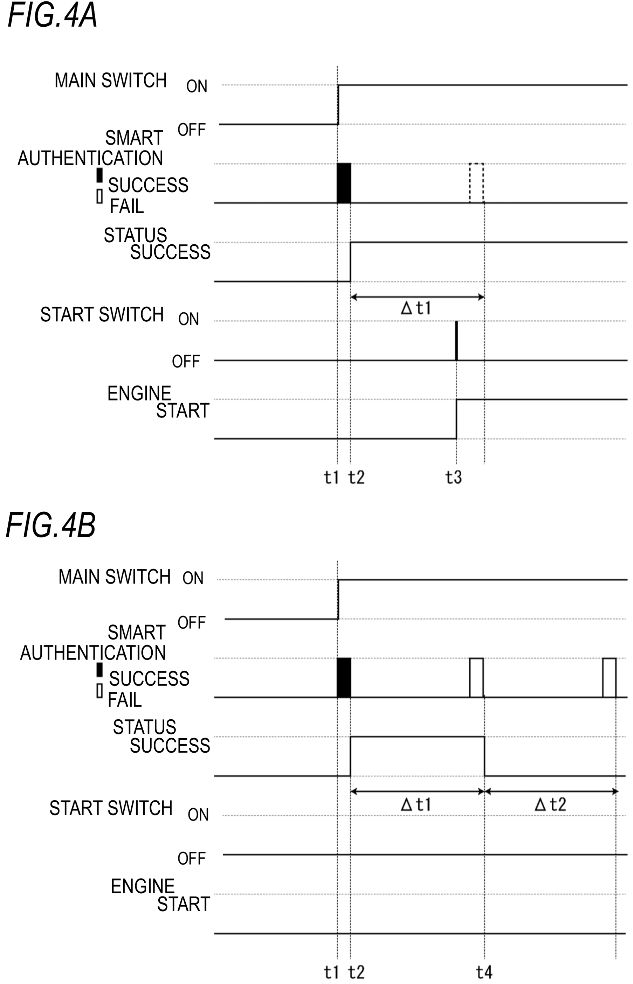

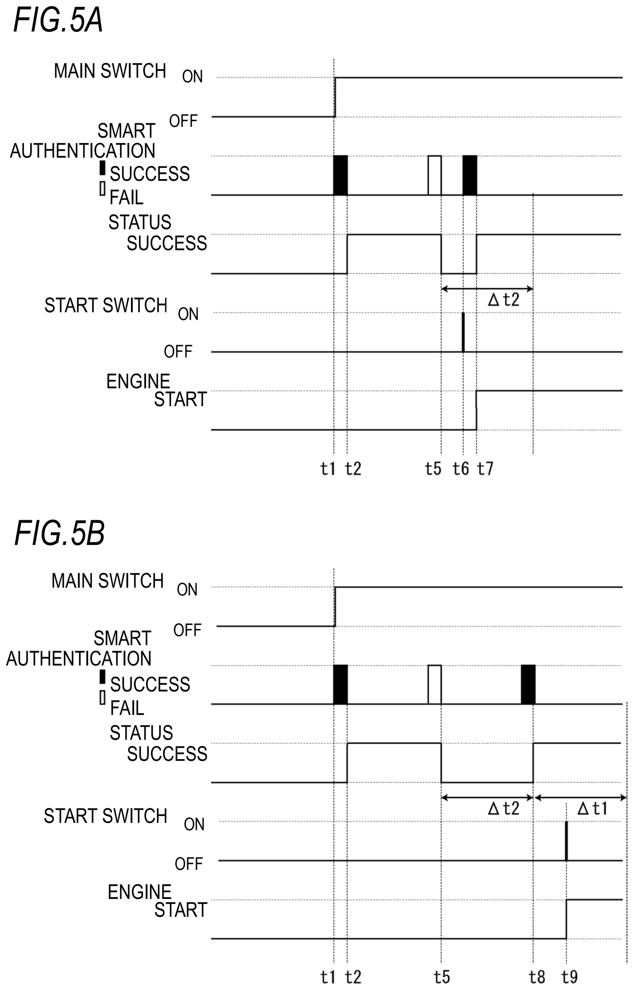

The smart key system will be described in detail below with reference to FIGS. 3 to 5B. FIG. 3 is a block diagram of the smart key system according to this example. FIGS. 4A, 4B, 5A and 5B are time charts of the smart authentication according to this example.

As illustrated in FIG. 3, in the smart key system 1, the driver 3 (see FIG. 1) carries the smart key 11, and the vehicle-side communication device 12, a main switch 13, a start switch 14, and a controller 15 are installed in the saddle-type vehicle 2. The smart key 11 has a built-in transceiver that receives radio waves from the vehicle-side communication device 12 and sends back a response signal including the ID. The vehicle-side communication device 12 has a built-in transceiver that transmits radio waves to the smart key 11 and receives a response signal. In this manner, the smart key 11 and the vehicle-side communication device 12 are wirelessly connected.

The main switch 13 accepts activation of the vehicle-side communication device 12. When the driver 3 turns on the main switch 13, power is supplied to each part of the vehicle from a battery (not illustrated), and radio waves are emitted from the vehicle-side communication device 12, starting wireless communication with the smart key 11. The start switch 14 accepts start of the engine 16. When the driver 3 turns on the start switch 14, an activation signal is sent from the controller 15 to a starter motor (not illustrated), which then rotates a crankshaft (not illustrated) to start the engine 16.

The controller 15 authenticates the response signal from the smart key 11. In this case, when the main switch 13 is turned ON, wireless communication is initiated between the vehicle-side communication device 12 and the smart key 11, and the controller 15 acquires the response signal from the smart key 11 via the vehicle-side communication device 12. Then, the ID of the saddle-type vehicle 2 is collated with the ID included in the response signal of the smart key 11. When the ID of the saddle-type vehicle 2 and the ID of the smart key 11 match, the authentication is determined to be successful, and if the ID of the saddle-type vehicle 2 and the ID of the smart key 11 do not match, the authentication is determined to be unsuccessful.

In the controller 15, an authentication process is started when the main switch 13 is turned on, and authentication is performed periodically after the initial authentication. When the start switch 14 is turned on within a certain period after the successful authentication, the engine 16 is started by the controller 15. When the start switch 14 is still OFF after a certain period has elapsed since the authentication is successful, the controller 15 resets the state of successful authentication. Furthermore, when the start switch 14 is turned on after authentication has failed, re-authentication is immediately performed without waiting for periodic authentication, and the engine 16 is started by the controller 15 after authentication has succeeded.

Specifically, as illustrated in FIG. 4A, when the main switch 13 is turned on at time t1, the controller 15 starts smart authentication. When the initial authentication is successful in the controller 15, the status of success is maintained at time t2 after the initial authentication. In this case, the controller 15 has a built-in timer (not illustrated), which measures the elapsed time from the time t2 when the authentication is successful. When the start switch 14 is pressed at time t3 before a certain period (status validity period) Δt1 has elapsed, an activation signal is immediately output from the controller 15 to the starter motor, and the engine 16 is started without any time lag. In this embodiment, the certain period Δt1 is set to a period (about 10 seconds in the system of this example) from the completion of the first smart authentication to the completion of the second smart authentication.

As illustrated in FIG. 4B, when the main switch 13 is turned on at time t1 and the initial authentication is successful in the controller 15, the status of success is maintained at time t2 after the initial authentication. The timer measures the elapsed time from time t2 when the authentication is successful, and if the driver 3 leaves the saddle-type vehicle 2 before the certain period Δt1 has elapsed, communication between the smart key 11 and the vehicle-side communication device 12 is lost, and smart authentication fails at time t4 (= time t2 + Δt1), which is the time at which the certain period Δt1 has elapsed from time t2, so the controller 15 resets the status of success. This prevents a third party from starting the engine 16 and thus prevents the vehicle from being stolen.

As illustrated in FIG. 5A, when the main switch 13 is turned on at time t1 and the initial authentication is successful in the controller 15, the status of success is maintained at time t2 after the initial authentication. When the subsequent periodic authentication fails, the status of success is reset at time t5 after the periodic authentication. The timer measures the time that has elapsed since time t5 when the authentication fails. When the start switch 14 is pressed at time t6 in a case where if the status is not a success state until a certain period (status validity period) Δt2 has elapsed since the authentication failure, , re-authentication is performed by the controller 15.

Then, when the re-authentication by the controller 15 is successful, at time t7 after the re-authentication, an activation signal is output from the controller 15 to the starter motor, and the engine 16 is started. As a result, even when smart authentication fails because the driver 3 has left the saddle-type vehicle 2, re-authentication is performed without waiting for periodic authentication by turning on the start switch 14 before the lapse of the certain period Δt2. Therefore, even when the authentication fails, the engine 16 can be started with a reduced time lag. When the certain period Δt2 has elapsed since the authentication failure, periodic authentication by the controller 15 is resumed.

Specifically, as illustrated in FIG. 5B, when the main switch 13 is turned on at time t1 and the initial authentication is successful in the controller 15, the status of success is maintained at time t2 after the initial authentication. When the periodic authentication thereafter fails, the status of success is reset at time t5 after the periodic authentication (up to this point is the same as in FIG. 5A). Thereafter, re-authentication is performed by the controller 15 so as to be completed at time t8 when a certain period (status validity period) Δt2 has elapsed from time t5. When the re-authentication is successful in the controller 15, the status of success is maintained at time t8 after the re-authentication. In this case, a timer built into the controller 15 measures the time that has elapsed since the time t8 when the authentication is successful. When the start switch 14 is pressed at time t9 before the certain period Δt1 has elapsed, an activation signal is immediately output from the controller 15 to the starter motor, and the engine 16 is started without any time lag. In this example, the certain period Δt2 is set to the time from the completion of the first smart authentication to the completion of the second smart authentication, similar to the certain period Δt1. The certain period Δt1 and the certain period Δt2 may be set to different lengths as appropriate.

Processing of each part of the smart key system 1 may be realized by software using a processor, or may be realized by a logic circuit (hardware) formed in an integrated circuit or the like. When a processor is used, the processor reads and executes a program stored in a memory to perform various processes. As the processor, for example, a Central Processing Unit (CPU) is used. The memory is composed of one or more storage media such as a Read Only Memory (ROM) and a Random Access Memory (RAM) depending on the application.

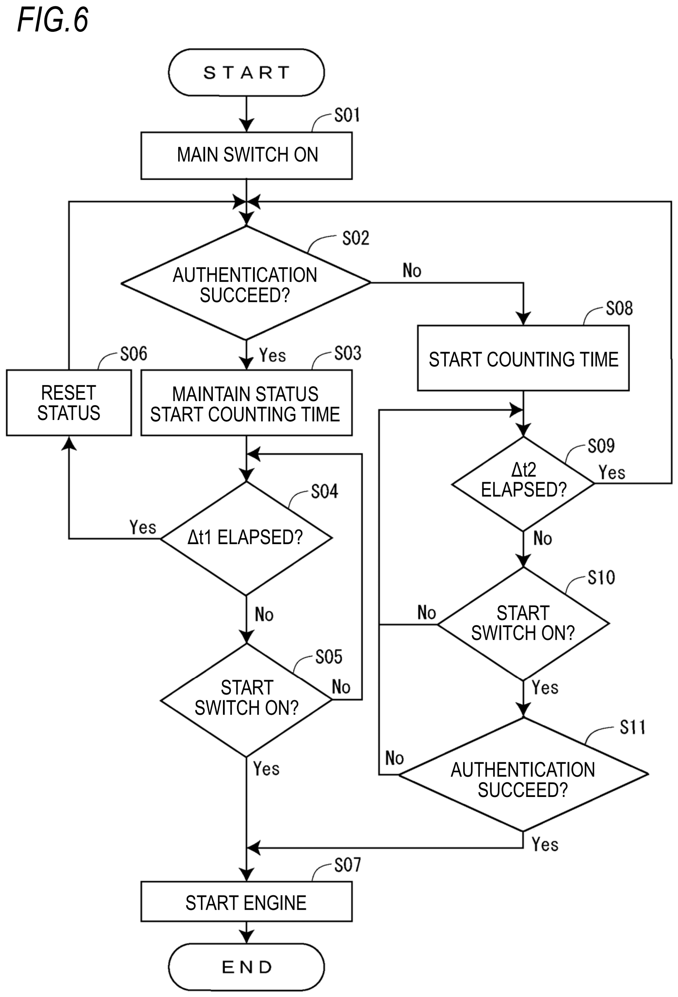

Next, flow of authentication process in the smart authentication will be described. FIG. 6 is a flow chart of the smart authentication according to this example.

As illustrated in FIG. 6, when the main switch 13 is turned on (step S01), wireless communication is started between the smart key 11 and the vehicle-side communication device 12, and smart authentication is performed by the controller 15 (step S02). When the smart authentication is successful (Yes in step S02), the status of success is maintained and a timer starts counting (step S03). When the start switch 14 remains OFF until a certain period Δt1 has elapsed (Yes in step S04, No in step S05), the controller 15 resets the status of success and performs the next authentication (step S06).

When the start switch 14 is turned ON before the certain period Δt1 has elapsed (No in step S04, Yes in step S05), the engine 16 is started by the controller 15 (step S07). On the other hand, when the smart authentication fails (No in step S02), the timer starts counting (step S08). When the start switch 14 remains OFF until a certain period Δt2 has elapsed (Yes in step S09, No in step S10), the controller 15 performs the next authentication.

When the start switch 14 is turned ON before the certain period Δt2 has elapsed (No in step S09, Yes in step S10), wireless communication is initiated between the smart key 11 and the vehicle-side communication device 12, and smart authentication is performed by the controller 15 (step S11). When the smart authentication fails (No in step S11), it is monitored whether the start switch 14 is turned ON within the certain period Δt2 (steps S09 and S10). When the smart authentication is successful (Yes in step S11), the engine 16 is started by the controller 15 (step S07).

As described above, according to the smart key system 1 of this example, authentication is completed before the start switch 14 is turned ON, so the engine 16 is started at the timing when the start switch 14 is turned ON. Therefore, a time lag from when the start switch 14 is turned on until the engine 16 starts is minimized. Even when the driver 3 leaves the saddle-type vehicle 2 after the main switch 13 is turned on, the status of the successful authentication is reset after a certain period has elapsed, so that even when the start switch 14 is turned on by a third party, the engine 16 is not started and the saddle-type vehicle 2 is not stolen.

In this example, an engine is exemplified as a prime mover, but the prime mover may be anything that converts energy into power, and the prime mover may be, for example, a motor.

Further, in this example, the controller is provided separately from the vehicle-side communication device, but the controller may be provided integrally with the vehicle-side communication device.

Furthermore, in this example, when smart authentication fails, periodic authentication is performed again after a certain period (status validity period) has elapsed. Alternatively, as a modification example, when smart authentication fails, authentication may be stopped after periodic authentication is performed a predetermined number of times. As another modification example, when smart authentication fails, authentication may be suspended until the start switch is turned ON.

Furthermore, in this example, the authentication process and the engine start control are performed by a single controller, but the authentication process and the engine start process may be performed by different controllers.

In this example, an authentication function for the smart key system may be added by installing a program in the saddle-type vehicle. This program is stored in a storage medium. The storage medium is not particularly limited, and may be a non-transitory storage medium such as an optical disk, a magneto-optical disk, or a flash memory.

Furthermore, the smart key system of this example is not limited to the above-mentioned saddle-type vehicle, but may be applied to other vehicles such as four-wheeled vehicles. A saddle-type vehicle is not limited to all vehicles in which a rider sits astride a seat, but also includes scooter-type vehicles in which a rider does not sit astride a seat.

As described above, a first aspect is a smart key system (1) that includes a vehicle-side communication device (12) installed in a vehicle (saddle-type vehicle 2) and a smart key (11) that can be carried by a driver (3), the vehicle-side communication device and the smart key being wirelessly connected, the system including a main switch (13) that accepts activation of the vehicle-side communication device, a start switch (14) that accepts start of a prime mover (engine 16) of the vehicle, and a controller (15) for authenticating a response signal from the smart key, where when the main switch is turned ON, an authentication process is started in the controller, and authentication is performed periodically after an initial authentication is performed, and when the start switch is turned ON within a certain period after successful authentication, the controller starts the prime mover, and when the start switch is still OFF even after a certain period elapses since successful authentication, the controller resets a state of the successful authentication. According to this configuration, since the authentication is completed before the start switch is turned ON, the prime mover is started at the timing when the start switch is turned ON. A time lag from when the start switch is turned ON until the prime mover starts is minimized. Even when the driver leaves the vehicle after the main switch is turned on, the status of successful authentication is reset after the certain period has elapsed, so that even when a third party presses the start switch, the prime mover is not started and the vehicle is not stolen.

In a second aspect, in the first aspect, when the start switch is turned ON after authentication fails, re-authentication is performed immediately without waiting for periodic authentication, and the prime mover is started by the controller after authentication is successful. According to this configuration, even when smart authentication fails because the driver has temporarily left the vehicle, when the driver approaches the vehicle again, re-authentication is performed by turning on the start switch without waiting for periodic authentication. This allows the prime mover to be started with a reduced time lag. In addition, by reducing the time lag from when the start switch is turned on, vehicle's unresponsive period is shortened, and control is implemented in line with driver's intentions.

Although the present example is described, other examples may be made by combining the above-described example and modification examples in whole or in part.

Furthermore, the technology of the present invention is not limited to the above-described example, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

- 1:: smart key system
- 2:: saddle-type vehicle
- 3:: driver
- 11:: smart key
- 12:: vehicle-side communication device
- 13:: main switch
- 14:: start switch
- 15:: controller
- 16:: engine (prime mover)

## Claims

1. A smart key system (1) that includes a vehicle-side communication device (12) installed in a vehicle (2) and a smart key (11) carried by a driver (3), the vehicle-side communication device and the smart key being wirelessly connected, the system comprising:
a main switch (13) configured to accept activation of the vehicle-side communication device;
a start switch (14) configured to accept start of a prime mover (16) of the vehicle; and
a controller (15) configured to authenticate a response signal from the smart key,
wherein
when the main switch is turned ON, an authentication process is started in the controller, and a periodic authentication is performed periodically after an initial authentication is performed, and
when the start switch is turned ON within a certain period after successful authentication, the controller starts the prime mover, and when the start switch is still OFF even after a certain period elapses since successful authentication, the controller resets a state of the successful authentication.

2. The smart key system according to claim 1, wherein when the start switch is turned ON after authentication fails, re-authentication is performed immediately without waiting for the periodic authentication, and the prime mover is started by the controller after authentication is successful.
